# EUROPÄISCHE PATENTSCHRIFT

(11) **EP 1 554 510 B1**
(45) Veröffentlichungstag und Bekanntmachung des Hinweises auf die Patenterteilung: **01.10.2008**
(21) Anmeldenummer: 03775188.0
(22) Anmeldetag: 16.10.2003
(51) Int. Cl.: F16H 63/44, F16H 63/08

(54) **SCHALTEINRICHTUNG**
SWITCHING DEVICE
DISPOSITIF DE CHANGEMENT DE VITESSE

(30) Priorität: 22.10.2002 DE 10249048
(43) Veröffentlichungstag der Anmeldung: 20.07.2005
(73) Patentinhaber: ZF Friedrichshafen AG, 88038 Friedrichshafen (DE)
(72) Erfinder: BADER, Josef, 88045 Friedrichshafen (DE)
(86) Internationale Anmeldenummer: PCT/EP2003/011453
(87) Internationale Veröffentlichungsnummer: WO 2004/038262

(56) Entgegenhaltungen:
- EP-A- 0 541 035
- EP-A- 0 595 496
- DE-A- 4 422 900
- US-A- 1 887 943
- US-A- 2 582 895

## Beschreibung

Die Erfindung betrifft eine Schalteinrichtung nach dem Oberbegriff von Anspruch 1.

Moderne und vielgängige Fahrzeuggetriebe in Nutzfahrzeugen weisen neben einem mehrgängigen Hauptgetriebeteil einen mehrgängigen Gruppengetriebeteil und/oder einen mehrgängigen Splittergetriebeteil auf. Mit einem Splittergetriebe lassen sich die Gangstufen des Hauptgetriebes in ihrer Übersetzung weiter aufteilen, so dass kleinere Stufensprünge in aufeinanderfolgenden Gängen entstehen. Mit einem Gruppengetriebe lässt sich die Gesamtübersetzung des Hauptgetriebes vergrößern, indem alle Gangstufen des Hauptgetriebes mit jeder Gangstufe des Gruppengetriebes zusammen genutzt werden können und in wenigstens einer Gangstufe des Gruppengetriebes die ansonsten direkte Übersetzung der Gangstufen des Hauptgetriebes untersetzt bzw. übersetzt wird.
Ein solches Fahrzeuggetriebe ist beispielhaft aus der DE 44 22 900 A1 bekannt geworden. Derartige Fahrzeuggetriebe werden überwiegend im Hauptgetriebeteil manuell geschaltet, während die Schaltungen im Splittergetriebeteil und im Gruppengetriebeteil durch einen pneumatischen oder hydraulischen Aktuator erfolgt, nachdem eine entsprechende Schaltung vom Fahrer ausgelöst worden ist.
Es ist auch eine automatisierte Schalteinrichtung für Fahrzeuggetriebe der eingangs genannten Art bekannt geworden, wie sie in der EP 0 541 035 B1 beschrieben ist. Dort sind in einer Steuerungseinheit Aktuatoren nebeneinanderliegend zusammengefasst, von denen je ein Aktuator den Splittergetriebeteil, den Hauptgetriebeteil und den Gruppengetriebeteil betätigt. Jeder dieser Aktuatoren greift über eine Schaltstange auf die jeweiligen Schalteinrichtungen an den Übersetzungsstufen ein. Nachteilig ist hier, dass jeder Getriebeteil von einem separaten Aktuator mit dazugehörenden Ventilen, Sensoren und Schaltstangen betätigt werden muss. Das bedeutet eine hohe Teilevielzahl und damit verbunden Kosten und ein hohes Gewicht.

Aus der US 1 877 943 A ist eine Schalteinrichtung bekannt, die die Merkmale des Oberbegriffs des Anspruchs 1 enthält.

Der Erfindung liegt die Aufgabe zugrunde, eine Schalteinrichtung für ein Fahrzeuggetriebe aufzuzeigen, die die Betätigung des Gruppengetriebeteils vereinfacht.

Die Aufgabe wird gelöst durch eine Schalteinrichtung mit den Merkmalen des Anspruchs 1. Ausgestaltungen sind Gegenstand von Unteransprüchen.

Eine Schalteinrichtung für ein mehrgängiges Fahrzeuggetriebe mit einem Hauptgetriebeteil und wenigstens einem Gruppengetriebeteil umfasst Schaltmittel zur Betätigung von Schaltelementen im Hauptgetriebeteil und Schaltmittel zur Betätigung von Schaltelementen im Gruppengetriebeteil. Erfindungsgemäß betätigen die Schaltmittel zur Betätigung der Schaltelemente im Hauptgetriebeteil auch die Schaltelemente im Gruppengetriebeteil. In einer vorteilhaften Ausgestaltung umfassen die Schaltmittel zur Betätigung der Schaltelemente im Hauptgetriebeteil eine einzige Schaltwelle. Die Schaltmittel zur Betätigung der Schaltelemente im Hauptgetriebeteil umfassen in einer Ausführungsform einen pneumatischen, hydraulischen oder elektrischen Aktuator zur Ausführung eines Schaltbefehls und in einer vorteilhaften Ausführungsform können die Schaltmittel zur Betätigung der Schaltelemente im Hauptgetriebeteil auch einen pneumatischen, hydraulischen oder elektrischen Aktuator zur Ausführung eines Wählbefehls umfassen. Die Ansteuerung des jeweiligen Aktuators erfolgt vorzugsweise automatisiert aufgrund von in einer Steuereinrichtung nach vorgegebenen Regeln verarbeiteten Befehlen. In einer bevorzugten Ausführungsform weisen die Schaltmittel einen Freiraum auf, in dem ein die Schaltelemente, insbesondere Schaltstangen betätigendes Element der Schaltmittel, beispielsweise ein Schaltfinger auf der Schaltwelle, während eines Wählvorganges zur Auswahl des gewünschten Schaltelementes in Richtung eines Schaltvorganges bewegbar ist. Die Bewegung des Schaltfingers geht dabei in die gleiche Richtung wie bei einem Schaltvorgang, stellt im Gegensatz dazu aber einen Teil eines Wählvorganges dar. Dadurch tragen Aktuatoren, die eigentlich Schaltbewegungen ausführen sollen, in einem bestimmten Bereich zur Wählbewegung bei. Eine Ausgestaltungsform zeigt, dass an den Freiraum einerseits ein Schaltelement des Gruppengetriebeteils und andererseits ein Schaltelement des Hauptgetriebeteils angrenzt. In diesem Freiraum wechselt der Schaltfinger bei seiner Bewegung von beispielsweise einer Schaltstange, die zur Schaltung des Hauptgetriebeteils dient, über in eine Schaltstange, mit der das Gruppengetriebe geschaltet wird. Vorzugsweise sind die Schaltelemente synchronisierte Schaltelemente. In einer weiteren und ebenfalls vorteilhaften Ausgestaltung umfassen die Schaltelemente eine Klauenschaltung ohne Synchronisierungselemente. Im Fall des Vorhandenseins einer Klauenschaltung ohne Synchronisierelemente sind die Schaltelemente neben dem Freiraum vorzugsweise Schaltelemente für die höchste und die niedrigste Übersetzungsstufe des Hauptgetriebeteils. Der Schaltfinger kann in einer vorteilhaften Ausführung auch nicht auf einer Schaltwelle angeordnet sein, sondern kann direkt von den zu den Schaltmitteln zählenden Aktuatoren betätigt werden und ist dazu mit diesen direkt verbunden.

Die Erfindung wird anhand einer Zeichnung näher beschrieben.
Es zeigen:
- Fig. 1: eine Darstellung der Schalteinrichtung;
- Fig. 2: eine schematische Darstellung der Schaltelemente einer synchronisierten Schaltung und
- Fig. 3: eine schematische Darstellung der Schaltelemente einer Klauenschaltung.

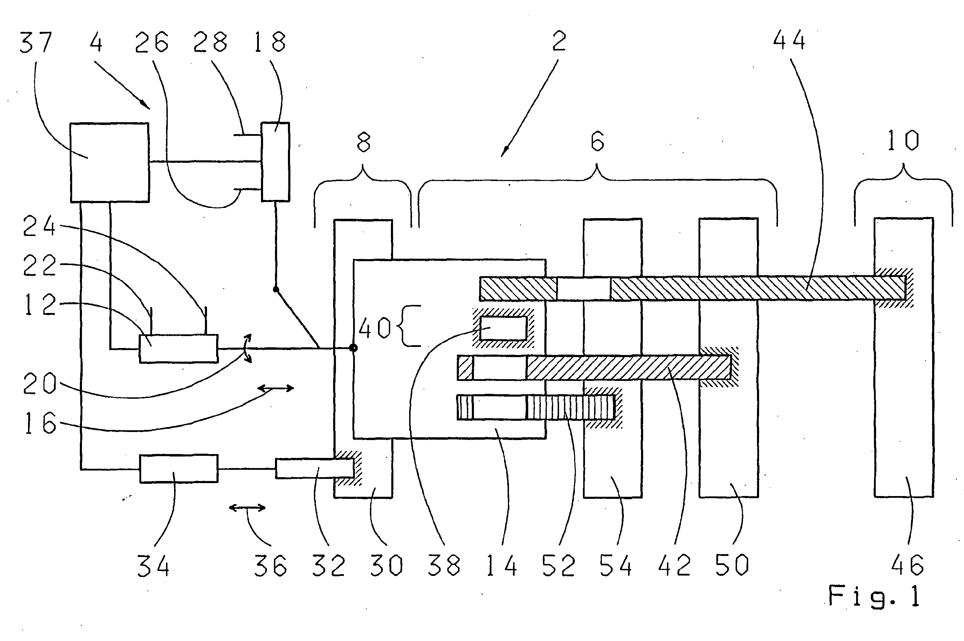

Die Fig. 1 zeigt eine Schalteinrichtung 2 eines Fahrzeuggetriebes 4 mit einem Hauptgetriebeteil 6, einem Splittergetriebeteil 8 und einem Gruppengetriebeteil 10. Ein Aktuator 12 betätigt eine Schaltwelle 14 bzw. einen Schaltfinger 38 axial entlang der Pfeilrichtungen 16. Von einem zweiten Aktuator 18 ist die Schaltwelle 14 um ihre Drehachse verschwenkbar entlang der Pfeilrichtungen 20. Mit den Aktuatoren 12 und 18 sind Anschlussleitungen 22, 24, 26 und 28 verbunden, über die die Aktuatoren 12 und 18 gesteuert werden. Dies können elektrische Leitungen sein, aber auch Zuführungsleitungen für ein Steuermedium in Form eines Fluids für eine hydraulische oder pneumatische Verstellung. Hier beschrieben wird eine pneumatische Ansteuerung mit Luft, wie sie häufig bei Nutzfahrzeugen fahrzeugbedingt vorhanden ist und neben der Bremsansteuerung auch für die Getriebeschaltung Verwendung findet. Im Splittergetriebeteil ist eine Schaltgabel 30 gezeigt, die in ein hier nicht gezeigtes Schaltelement im Splittergetriebeteil 8 eingreift und zwei Stufen des Splittergetriebes zur Unterteilung eines Gangsprunges im Hauptgetriebeteil 6 aufteilt. Die Schaltgabel 30 wird über eine Schaltstange 32 axial entlang der Pfeilrichtungen 36 von einem Aktuator 34 verschoben, wodurch die unterschiedlichen Stufen des Splittergetriebeteils 8 geschaltet werden können. Die Aktuatoren 12, 18 und 34 sind mit einer Steuereinrichtung 37 verbunden, in der Schaltsignale nach vorgegebenen Regeln erzeugt werden.

Die Schaltwelle 14 weist den Schaltfinger 38 auf, der in der Fig. 1 in einem Freiraum 40 zwischen einer Schaltstange 42 und einer Schaltstange 44 angeordnet ist. In dieser Position kann der Aktuator 12 die Schaltwelle 14 und damit den Schaltfinger 38 axial entlang der Pfeilrichtungen 16 frei verschieben, ohne dass eine der Schaltstangen 42 oder 44 bewegt wird. Mit der Schaltstange 44 fest verbunden ist die Schaltgabel 46, die in eine hier nicht gezeigte Schiebemuffe im Gruppengetriebeteil 10 eingreift. Mit der Schaltstange 42 ist eine Schaltgabel 50 fest verbunden, die zur Schaltung zweier Gangstufen im Hauptgetriebeteil 6 vorgesehen ist. Diese beiden Gangstufen stellen insbesondere den ersten Vorwärtsgang und den Rückwärtsgang des Hauptgetriebeteils 6 dar. Auf der dem Freiraum 40 gegenüberliegenden Seite der Schaltstange 42 ist eine weitere Schaltstange 52 vorgesehen, in die der Schaltfinger 38 ebenfalls eingreifen kann. Die Schaltstange 52 ist mit der Schaltgabel 54 verbunden, die beispielsweise den zweiten und dritten Vorwärtsgang im Hauptgetriebeteil 6 schaltet.

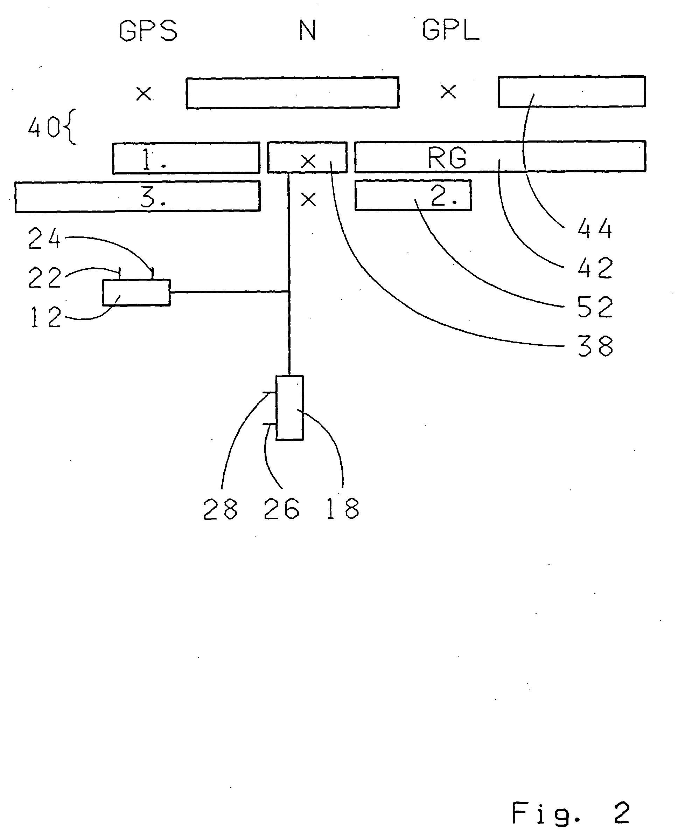

Mit Hilfe der Fig. 2 wird der Schaltablauf einer Schaltung im Hauptgetriebeteil 6 und Gruppengetriebeteil 10 beschrieben. In dieser Variante ist der Gruppengetriebeteil 10 mit einer Synchronisierung versehen. Entsprechend der Fig. 1 ist in dieser schematischen Darstellung der Schaltfinger 38 in einer zentralen Position gezeigt, die er einnimmt, wenn an den Aktuatoren 12 und 18 an allen Eingängen 22, 24, 26 und 28 Luft aus einem hier nicht gezeigten zentralen Luftvorrat bei einer pneumatischen Schaltung anliegt. Bei einer Rückschaltung aus dem vierten Gang in den dritten Gang des Fahrzeuggetriebes 4 wird zunächst die Fahrzeugkupplung geöffnet und an der zentralen Luftversorgung liegt Luft an. Bei dem hier gezeigten Fahrzeuggetriebe sind im Hauptgetriebeteil 6 drei Vorwärtsgänge und ein Rückwärtsgang vorgesehen, so dass die ersten drei Vorwärtsgänge mit der langsamen Stellung (GPL) des Gruppengetriebeteils 10 vorgenommen werden und der vierte Vorwärtsgang der Stellung des ersten Vorwärtsganges im Hauptgetriebeteil 6 verbunden mit der schnellen Stellung (GPS) des Gruppengetriebeteils 10 entspricht.

Hier dargestellt ist die Schaltstange 44 in der langsamen Stellung (GPL) des Gruppengetriebeteils 10.

In der Stellung für den vierten Gang als Ausgangsstellung für die zunächst zu beschreibende Rückschaltung befindet sich der Schaltfinger 38 im Bereich der Schaltstange 42 in einer gegenüber der gezeigten Position in Fig. 2 nach links versetzten Position, so dass die Schaltstange 42 den ersten Gang im Hauptgetriebeteil 6 eingelegt hat. Dazu ist am Aktuator 12 die Anschlussleitung 24 belüftet. Ebenso sind am Aktuator 18 die Anschlussleitungen 26 und 28 gleichzeitig belüftet, um den Schaltfinger in dieser Position entsprechend der Pfeilrichtungen 20 zu halten. Anschließend wird die Anschlussleitung 22 zusätzlich belüftet, wodurch der Schaltfinger 38 die in der Fig. 2 gezeigte Position einnimmt und in einer Neutralstellung steht. Daraufhin wird die Fahrzeugkupplung geschlossen. Durch Entlüften der Anschlussleitung 28 wird der Schaltfinger 38 in der Zeichenebene der Fig. 2 nach oben verschoben, bis er seinen Weg in diese Richtung nicht fortsetzen kann, weil er an die Schaltstange 44 anschlägt. Durch ein folgendes, zusätzliches Entlüften der Anschlussleitung 22 bewegt sich der Schaltfinger 38 im Freiraum 40 zwischen der Schaltstange 44 und der Schaltstange 42 in der Zeichenebene der Fig. 2 nach links, bis er in der Stellung GPS in eine Öffnung in der Schaltstange 44 eingreifen kann, wobei die Bewegung des Schaltfingers in Richtung auf diese Öffnung durch den Aktuator 18 aufrechterhalten bleibt und die Behinderung der Fortsetzung der Bewegung des Schaltfingers 38 nach oben in der Zeichenebene beim Erreichen der Öffnung entfällt. Daraufhin wird die Anschlussleitung 22 wieder belüftet und der Schaltfinger 38 verschiebt die Schaltstange 44 zunächst bis zum Erreichen der Stellung N. Anschließend wird die Anschlussleitung 24 entlüftet und der Schaltfinger verschiebt die Schaltstange 38 vollständig bis zum Erreichen der Stellung GPL. Damit ist der Gruppengetriebeteil in die langsame Übersetzungsstellung geschaltet, während sich der Hauptgetriebeteil 6 weiterhin in der Neutralstellung befindet. Der für den Schaltfinger zurückzulegende Weg zwischen den Stellungen GPS und GPL entspricht dem Weg, den der Schaltfinger in einer der Schaltstangen 42 und 52 zwischen den beiden jeweils eingelegten Schaltendstellungen zurücklegen muss. Die Entfernung einer eingelegten Schaltendstellung auf den Schaltstangen 42 und 52 von der Neutrallage entspricht somit der Entfernung der eingelegten Schaltendstellung GPS oder GPS an der Schaltstange 44 von der Neutralstellung N. Zur abschließenden Schaltung im Hauptgetriebeteil 6 wird nun die Anschlussleitung 22 entlüftet, um zunächst eine Bewegung des Schaltfingers 38 und ein Verklemmen zu vermeiden. Die zusätzliche Belüftung der Anschlussleitung 28 führt dazu, dass der Schaltfinger 38 in der Zeichenebene der Fig. 2 nach unten verschoben wird, bis er seinen Weg in diese Richtung nicht fortsetzen kann, weil er an die Schaltstange 42 anschlägt. Durch ein folgendes Belüften der Anschlussleitungen 22 und 24 bewegt sich der Schaltfinger 38 in der Zeichenebene der Fig. 2 nach links, bis er in der Stellung N in die Öffnung in der Schaltstange 42 eingreifen kann, wobei die Bewegung des Schaltfingers in Richtung auf diese Öffnung durch den Aktuator 18 aufrechterhalten bleibt und die Behinderung der Fortsetzung der Bewegung des Schaltfingers 38 nach unten in der Zeichenebene beim Erreichen der Öffnung entfällt. Die Anschlussleitung 26 wird entlüftet, wodurch der Schaltfinger 38 in die Öffnung in der Schaltstange 52 eingreifen kann. In dieser Stellung verharrt der Schaltfinger 38 zunächst so lange, bis die für die Schaltung im Hauptgetriebeteil 6 erforderliche Motordrehzahl erreicht ist. Sobald die gewünschte Drehzahl erreicht ist, wird zunächst auch die Anschlussleitung 22 entlüftet und der Schaltfinger 38 schiebt die Schaltstange 52 in der Zeichnungsebene der Fig. 2 nach links, wodurch der dritte Gang geschaltet wird. Abschließend wird die zentrale Luftversorgung ausgeschaltet.

Ebenfalls mit Hilfe der Fig. 2 wird nun der Schaltablauf einer weiteren Schaltung im Hauptgetriebeteil 6 und Gruppengetriebeteil 10 beschrieben. Auch in dieser Variante ist der Gruppengetriebeteil 10 mit einer Synchronisierung versehen. Bei einer Hochschaltung aus dem dritten Gang in den vierten Gang des Fahrzeuggetriebes 4 wird zunächst die Fahrzeugkupplung geöffnet und an der zentralen Luftversorgung liegt Luft an. Wie bereits vorher gesagt sind bei dem hier gezeigten Fahrzeuggetriebe im Hauptgetriebeteil 6 drei Vorwärtsgänge und ein Rückwärtsgang vorgesehen, so dass die ersten drei Vorwärtsgänge mit der langsamen Stellung (GPL) des Gruppengetriebeteils 10 vorgenommen werden und der vierte Vorwärtsgang der Stellung des ersten Vorwärtsganges im Hauptgetriebeteil 6 verbunden mit der schnellen Stellung (GPS) des Gruppengetriebeteils 10 entspricht. In der Stellung für den dritten Gang als Ausgangsstellung für die jetzt zu beschreibende Hochschaltung befindet sich der Schaltfinger 38 im Bereich der Schaltstange 52 in einer gegenüber der gezeigten Position in Fig. 2 nach links und nach unten versetzten Position, so dass die Schaltstange 52 den dritten Gang im Hauptgetriebeteil 6 eingelegt hat. Dazu ist am Aktuator 12 die Anschlussleitung 24 belüftet. Ebenso ist am Aktuator 18 die Anschlussleitung 28 belüftet. Anschließend wird die Anschlussleitung 22 zusätzlich belüftet, wodurch der Schaltfinger 38 zunächst eine gegenüber der in der Fig. 2 gezeigten Position nach unten versetzte Position einnimmt und in einer Neutralstellung steht. Daraufhin wird die Fahrzeugkupplung geschlossen. Durch Entlüften der Anschlussleitung 28 und Belüften der Anschlussleitung 26 wird der Schaltfinger 38 in der Zeichenebene der Fig. 2 nach oben verschoben, bis er seinen Weg in diese Richtung nicht fortsetzen kann, weil er an die Schaltstange 44 anschlägt. Durch ein folgendes, zusätzliches Entlüften der Anschlussleitung 24 bewegt sich der Schaltfinger 38 im Freiraum 40 zwischen der Schaltstange 44 und der Schaltstange 42 in der Zeichenebene der Fig. 2 nach rechts, bis er in der Stellung GPL in eine Öffnung in der Schaltstange 44 eingreifen kann, wobei die Bewegung des Schaltfingers in Richtung auf diese Öffnung durch den Aktuator 18 aufrechterhalten bleibt und die Behinderung der Fortsetzung der Bewegung des Schaltfingers 38 nach oben in der Zeichenebene beim Erreichen der Öffnung wieder entfällt. Daraufhin wird die Anschlussleitung 24 wieder belüftet und der Schaltfinger 38 verschiebt die Schaltstange 44 zunächst bis zum Erreichen der Stellung N. Anschließend wird die Anschlussleitung 22 entlüftet und der Schaltfinger 38 verschiebt die Schaltstange 44 vollständig bis zum Erreichen der Stellung GPS. Damit ist der Gruppengetriebeteil 10 in die schnelle Übersetzungsstellung geschaltet, während sich der Hauptgetriebeteil 6 weiterhin in der Neutralstellung befindet. Zur abschließenden Schaltung im Hauptgetriebeteil 6 werden nun die Anschlussleitungen 22 und 24 entlüftet, um zunächst eine Bewegung des Schaltfingers 38 und ein Verklemmen zu vermeiden. Die zusätzliche Belüftung der Anschlussleitung 28 führt dazu, dass der Schaltfinger 38 in der Zeichenebene der Fig. 2 nach unten verschoben wird, bis er seinen Weg in diese Richtung nicht fortsetzen kann, weil er an die Schaltstange 42 anschlägt. Durch ein folgendes Belüften der Anschlussleitungen 22 und 24 bewegt sich der Schaltfinger 38 im Freiraum 40 in der Zeichenebene der Fig. 2 nach rechts, bis er in der Stellung N in die Öffnung in der Schaltstange 42 eingreifen kann, wobei die Bewegung des Schaltfingers in Richtung auf diese Öffnung durch den Aktuator 18 aufrechterhalten bleibt und die Behinderung der Fortsetzung der Bewegung des Schaltfingers 38 nach unten in der Zeichenebene beim Erreichen der Öffnung entfällt. In dieser Stellung verharrt der Schaltfinger 38 zunächst so lange, bis die für die Schaltung im Hauptgetriebeteil 6 erforderliche Motordrehzahl erreicht ist. Sobald die gewünschte Drehzahl erreicht ist, wird die Anschlussleitung 22 entlüftet und der Schaltfinger 38 schiebt die Schaltstange 42 in der Zeichnungsebene der Fig. 2 nach links, wodurch der vierte Gang als erster Gang im Hauptgetriebeteil 6 geschaltet wird. Abschließend wird die zentrale Luftversorgung ausgeschaltet.

Bei den bisher beschriebenen beiden Schaltvorgängen erfolgt die Umschaltung des Gruppengetriebeteils 10 solange der Hauptgetriebeteil 6 in Neutral steht, also im Hauptgetriebeteil 6 kein Gang eingelegt ist, während der Motor des Fahrzeugs auf die jeweilige Anschlussdrehzahl geregelt wird. Die Schaltung im Hauptgetriebeteil 6 wird dann als letzter Teil der gesamten Schaltung ausgeführt. Bei der Verwendung einer Klauenschaltung im Gruppengetriebeteil 10 erfolgt der Drehzahlabgleich für die Schaltung im Gruppengetriebeteil 10 durch die Motorsynchronisation. Deshalb muss die Schaltung im Gruppengetriebeteil 10 in dem Fall als letzte Schaltung durchgeführt werden und die Schaltung im Hauptgetriebeteil 6 dann schon abgeschlossen sein. Damit der Freiraum 40 zur Bewegung des Schaltfingers 38 auch erreicht werden kann, während sich die Schaltstange 42 in einer Schaltendstellung befindet, müssen die Gänge des Hauptgetriebeteils 6, die von der Schaltstange 42 geschaltet werden, in dieser Variante die niedrigste und die höchste Übersetzung des Hauptgetriebeteils 6 beinhalten. Nur dann kann aus der Schaltendstellung mit dem Schaltfinger die Schaltstange 44 zur Verstellung des Gruppengetriebeteils 10 angefahren werden und aus dem höchsten Gang der langsamen Übersetzung des Gruppengetriebeteils 10 in den niedrigsten Gang der schnellen Übersetzung des Gruppengetriebeteils 10 umgeschaltet werden und umgekehrt.

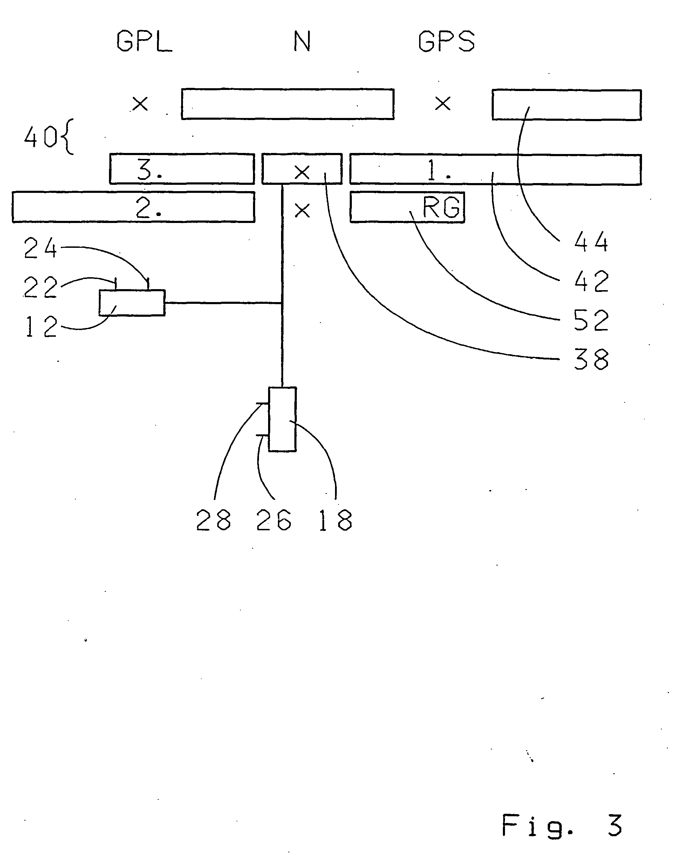

In der Fig. 3 sind an der Schaltstange 42 der erste und der dritte Gang des Hauptgetriebeteils 6 angeordnet, während an der Schaltstange 52 der zweite Gang und der Rückwärtsgang angeordnet sind. Mit Hilfe der Fig. 3 wird der Schaltablauf einer Schaltung im Hauptgetriebeteil 6 und Gruppengetriebeteil 10 beschrieben. In dieser Variante ist der Gruppengetriebeteil 10 mit einer Klauenschaltung versehen. Entsprechend der Fig. 1 ist in dieser schematischen Darstellung der Schaltfinger 38 in einer zentralen Position gezeigt, die er einnimmt, wenn an den Aktuatoren 12 und 18 an allen Eingängen 22, 24, 26 und 28 Luft aus einem hier nicht gezeigten zentralen Luftvorrat bei einer pneumatischen Schaltung anliegt.

Hier ist die Schaltstange 44 in der schnellen Stellung (GPS) des Gruppengetriebes dargestellt. Dies ist gegenüber den Stellungen in der Fig. 2 getauscht, dient aber der Optimierung des Schaltablaufs. Je nach Konstruktion des Gruppengetriebes sind die Stellungen der Schaltstange unterschiedlich zu gestalten. Bei einer Anordnung der Stellungen gemäß Fig. 2 ist der im Folgenden beschriebene Schaltablauf entsprechend anzupassen.

Bei einer Rückschaltung aus dem vierten Gang in den dritten Gang des Fahrzeuggetriebes 4 wird zunächst die Fahrzeugkupplung geöffnet und an der zentralen Luftversorgung liegt Luft an. Wie bereits zu der anderen Variante dargelegt, sind bei dem hier gezeigten Fahrzeuggetriebe im Hauptgetriebeteil 6 drei Vorwärtsgänge und ein Rückwärtsgang vorgesehen, so dass die ersten drei Vorwärtsgänge mit der langsamen Stellung (GPL) des Gruppengetriebeteils 10 vorgenommen werden und der vierte Vorwärtsgang der Stellung des ersten Vorwärtsganges im Hauptgetriebeteil 6 verbunden mit der schnellen Stellung (GPS) des Gruppengetriebeteils 10 entspricht. In der Stellung für den vierten Gang als Ausgangsstellung für die zunächst zu beschreibende Rückschaltung befindet sich der Schaltfinger 38 im Bereich der Schaltstange 42 in einer gegenüber der gezeigten Position in Fig. 3 nach rechts versetzten Position, so dass die Schaltstange 42 den ersten Gang im Hauptgetriebeteil 6 eingelegt hat. Dazu ist am Aktuator 12 die Anschlussleitung 22 belüftet. Ebenso sind am Aktuator 18 die Anschlussleitungen 26 und 28 gleichzeitig belüftet, um den Schaltfinger in dieser Position entsprechend der Pfeilrichtungen 20 zu halten. Anschließend wird die Anschlussleitung 22 entlüftet. Durch Entlüften der Anschlussleitung 28 wird der Schaltfinger 38 in der Zeichenebene der Fig. 3 nach oben verschoben, bis er in der Stellung GPS in eine Öffnung in der Schaltstange 44 eingreifen kann. Daraufhin werden die Anschlussleitungen 22 und 24 wieder belüftet und der Schaltfinger 38 verschiebt die Schaltstange 44 bis zum Erreichen der Stellung N. Damit ist der Gruppengetriebeteil in die Neutralstellung geschaltet, während sich der Hauptgetriebeteil 6 weiterhin im ersten Gang befindet. Anschlussleitungen 22 und 24 werden entlüftet. Durch zusätzliche Belüftung der Anschlussleitung 28 bewegt sich der Schaltfinger 38 in der Zeichnungsebene der Fig. 3 nach unten, bis er seinen Weg in diese Richtung nicht fortsetzen kann, weil er an die Schaltstange 42 anschlägt. Durch ein folgendes, zusätzliches Belüften der Anschlussleitung 22 bewegt sich der Schaltfinger 38 im Freiraum 40 zwischen der Schaltstange 44 und der Schaltstange 42 in der Zeichenebene der Fig. 3 nach rechts, bis er in der Stelllung für den ersten Gang in die Öffnung in der Schaltstange 42 eingreifen kann, wobei die Bewegung des Schaltfingers in Richtung auf diese Öffnung durch den Aktuator 18 aufrechterhalten bleibt und die Behinderung der Fortsetzung der Bewegung des Schaltfingers 38 nach unten in der Zeichenebene beim Erreichen der Öffnung entfällt. Nach Erreichen der für die Schaltung im Hauptgetriebeteil 6 notwendigen Schaltdrehzahl, wird die Anschlussleitung 22 entlüftet und die Anschlussleitung 24 belüftet und die Schaltstange 42 schaltet in der Zeichenebene nach links bis die Schaltendstellung für den dritten Gang im Hauptgetriebeteil 6 erreicht ist. Daraufhin wird die Fahrzeugkupplung geschlossen. Zur abschließenden Schaltung im Gruppengetriebeteil 10 werden nun die Anschlussleitungen 22 und 24 entlüftet, um zunächst eine Bewegung des Schaltfingers 38 zu vermeiden. Durch Entlüften der Anschlussleitung 28 wird der Schaltfinger 38 in der Zeichenebene der Fig. 3 nach oben verschoben, bis er seinen Weg in diese Richtung nicht fortsetzen kann, weil er an die Schaltstange 44 anschlägt. Durch ein folgendes, gleichzeitiges Belüften der Anschlussleitungen 22 und 24 bewegt sich der Schaltfinger 38 im Freiraum 40 zwischen der Schaltstange 44 und der Schaltstange 42 in der Zeichenebene der Fig. 3 nach rechts, bis er in der Stellung N in die Öffnung in der Schaltstange 44 eingreifen kann, wobei die Bewegung des Schaltfingers in Richtung auf diese Öffnung durch den Aktuator 18 aufrechterhalten bleibt und die Behinderung der Fortsetzung der Bewegung des Schaltfingers 38 nach oben in der Zeichenebene beim Erreichen der Öffnung entfällt. In dieser Stellung verharrt der Schaltfinger 38 zunächst so lange, bis die für die Schaltung im Gruppengetriebeteil 10 erforderliche Motordrehzahl erreicht ist. Sobald die gewünschte Drehzahl erreicht ist, wird die Anschlussleitung 22 entlüftet und der Schaltfinger 38 verschiebt die Schaltstange 44 bis zum Erreichen der Stellung GPL. Die Anschlussleitung 24 wird entlüftet. Die zusätzliche Belüftung der Anschlussleitung 28 führt dazu, dass der Schaltfinger 38 in der Zeichenebene der Fig. 3 nach unten verschoben wird, bis er in der Stellung des geschalteten dritten Ganges des Hauptgetriebeteils 6 in die Öffnung in der Schaltstange 42 eingreifen kann. Abschließend wird die zentrale Luftversorgung ausgeschaltet.

Ebenfalls mit Hilfe der Fig. 3 wird nun der Schaltablauf einer weiteren Schaltung im Hauptgetriebeteil 6 und Gruppengetriebeteil 10 beschrieben. Auch in dieser Variante ist der Gruppengetriebeteil 10 mit einer Klauenschaltung versehen. Bei einer Hochschaltung aus dem dritten Gang in den vierten Gang des Fahrzeuggetriebes 4 wird zunächst die Fahrzeugkupplung geöffnet und an der zentralen Luftversorgung liegt Luft an. In der Stellung für den dritten Gang als Ausgangsstellung für die zu beschreibende Hochschaltung befindet sich der Schaltfinger 38 im Bereich der Schaltstange 42 in einer gegenüber der gezeigten Position in Fig. 3 nach links versetzten Position, so dass die Schaltstange 42 den dritten Gang im Hauptgetriebeteil 6 eingelegt hat. Dazu ist am Aktuator 12 die Anschlussleitung 24 belüftet. Ebenso sind am Aktuator 18 die Anschlussleitungen 26 und 28 gleichzeitig belüftet, um den Schaltfinger in dieser Position entsprechend der Pfeilrichtungen 20 zu halten. Anschließend wird die Anschlussleitung 24 zusätzlich entlüftet. Durch Entlüften der Anschlussleitung 28 wird der Schaltfinger 38 in der Zeichenebene der Fig. 3 nach oben verschoben, bis er in der Stellung GPL in eine Öffnung in der Schaltstange 44 eingreifen kann. Daraufhin werden die Anschlussleitungen 22 und 24 wieder belüftet und der Schaltfinger 38 verschiebt die Schaltstange 44 bis zum Erreichen der Stellung N. Damit ist der Gruppengetriebeteil in die Neutralstellung geschaltet, während sich der Hauptgetriebeteil 6 weiterhin in der Stellung für den dritten Gang befindet. Anschlussleitungen 22 und 24 werden entlüftet. Durch zusätzliche Belüftung der Anschlussleitung 28 bewegt sich der Schaltfinger 38 in der Zeichnungsebene der Fig. 3 nach unten, bis er seinen Weg in diese Richtung nicht fortsetzen kann, weil er an die Schaltstange 42 anschlägt. Durch ein folgendes, zusätzliches Belüften der Anschlussleitung 24 bewegt sich der Schaltfinger 38 im Freiraum 40 zwischen der Schaltstange 44 und der Schaltstange 42 in der Zeichenebene der Fig. 3 nach links, bis er in der Stellung für den dritten Gang in die Öffnung in der Schaltstange 42 eingreifen kann, wobei die Bewegung des Schaltfingers in Richtung auf diese Öffnung durch den Aktuator 18 aufrechterhalten bleibt und die Behinderung der Fortsetzung der Bewegung des Schaltfingers 38 nach unten in der Zeichenebene beim Erreichen der Öffnung entfällt. Nach Erreichen der für die Schaltung im Hauptgetriebeteil 6 notwendigen Schaltdrehzahl, wird die Anschlussleitung 24 entlüftet und die Anschlussleitung 22 belüftet und die Schaltstange 42 schaltet in der Zeichenebene nach rechts bis die Schaltendstellung für den ersten Gang im Hauptgetriebeteil 6 erreicht ist. Daraufhin wird die Fahrzeugkupplung geschlossen. Zur abschließenden Schaltung im Gruppengetriebeteil 10 werden nun die Anschlussleitungen 22 und 24 entlüftet, um zunächst eine Bewegung des Schaltfingers 38 zu vermeiden. Durch Entlüften der Anschlussleitung 28 wird der Schaltfinger 38 in der Zeichenebene der Fig. 3 nach oben verschoben, bis er seinen Weg in diese Richtung nicht fortsetzen kann, weil er an die Schaltstange 44 anschlägt. Durch ein folgendes, gleichzeitiges Belüften der Anschlussleitungen 22 und 24 bewegt sich der Schaltfinger 38 im Freiraum 40 zwischen der Schaltstange 44 und der Schaltstange 42 in der Zeichenebene der Fig. 3 nach links, bis er in der Stellung N in die Öffnung in der Schaltstange 44 eingreifen kann, wobei die Bewegung des Schaltfingers in Richtung auf diese Öffnung durch den Aktuator 18 aufrechterhalten bleibt und die Behinderung der Fortsetzung der Bewegung des Schaltfingers 38 nach oben in der Zeichenebene beim Erreichen der Öffnung entfällt. In dieser Stellung verharrt der Schaltfinger 38 zunächst so lange, bis die für die Schaltung im Gruppengetriebeteil 10 erforderliche Motordrehzahl erreicht ist. Sobald die gewünschte Drehzahl erreicht ist, wird die Anschlussleitung 24 entlüftet und der Schaltfinger 38 verschiebt die Schaltstange 44 bis zum Erreichen der Stellung GPS. Die Anschlussleitung 22 wird entlüftet. Die zusätzliche Belüftung der Anschlussleitung 28 führt dazu, dass der Schaltfinger 38 in der Zeichenebene der Fig. 3 nach unten verschoben wird, bis er in der Stellung des geschalteten ersten Ganges des Hauptgetriebeteils 6 in die Öffnung in der Schaltstange 42 eingreifen kann. Abschließend wird die zentrale Luftversorgung ausgeschaltet.

Durch den beschriebenen Aufbau kann für die Schaltung des Gruppengetriebeteils 10 ein separater Aktuator mit zugehöriger Steuerung bzw. Steuerventilen ebenso entfallen, wie die notwendige mechanische Übertragung zwischen diesem Aktuator und der Schaltgabel im Gruppengetriebeteil 10. Besonders vorteilhaft wirkt sich dies aus, wenn ein ursprünglich für vier Gangstufen im Hauptgetriebeteil ausgelegtes Getriebe auf eine dieser Gangstufen verzichtet du dadurch eine Schaltstange entfallen kann. Die Ganganzahl des Fahrzeuggetriebes ist dadurch zwar reduziert, aber an der Schaltung können dadurch Aufwendungen eingespart werden.

### Bezugszeichen

- 2: Schalteinrichtung
- 4: Fahrzeuggetriebe
- 6: Hauptgetriebeteil
- 8: Splittergetriebeteil
- 10: Gruppengetriebeteil
- 12: Aktuator
- 14: Schaltwelle
- 16: Pfeilrichtung
- 18: Aktuator
- 20: Pfeilrichtung
- 22: Anschlussleitung
- 24: Anschlussleitung
- 26: Anschlussleitung
- 28: Anschlussleitung
- 30: Schaltgabel
- 32: Schaltstange
- 34: Aktuator
- 36: Pfeilrichtung
- 37: Steuereinrichtung
- 38: Schaltfinger
- 40: Freiraum
- 42: Schaltstange
- 44: Schaltstange
- 46: Schaltgabel
- 50: Schaltgabel
- 52: Schaltstange
- 54: Schaltgabel

## Patentansprüche

1. Schalteinrichtung (2) für ein mehrgängiges Fahrzeuggetriebe (4) mit einem Hauptgetriebeteil (6) und wenigstens einem Gruppengetriebeteil (10), die Schaltmittel (12, 14, 18, 38) zur Betätigung von Schaltelementen (42, 50, 52, 54) im Hauptgetriebeteil (6) und Schaltmittel (12, 14, 18, 38) zur Betätigung von Schaltelementen (44, 46) im Gruppengetriebeteil (10) umfasst, und bei der die Schaltmittel (12, 14, 18, 38) zur Betätigung der Schaltelemente (42, 50. 52. 54) im Hauptgetriebeteil (6) auch die Schaltelemente (44, 46) im Gruppengetriebeteil (10) betätigen, **dadurch gekennzeichnet, dass** die Schaltmittel (12, 14,18, 38) einen Freiraum (40) aufweisen, in dem ein die Schaltelemente (42, 44, 46, 50, 52, 54) betätigendes Element (38) der Schaltmittel während eines Wählvorganges zur Auswahl des gewünschten Schaltelementes (42, 44, 46, 50, 52, 54) in Richtung eines Schaltvorganges bewegbar ist.

2. Schalteinrichtung (2) nach Anspruch 1, **dadurch gekennzeichnet, dass** die Schaltmittel (12, 14, 18, 38) zur Betätigung der Schaltelemente (42, 50, 52, 54) im Hauptgetriebeteil (6) einen pneumatischen, hydraulischen oder elektrischen Aktuator (12) zur Ausführung eines Schaltbefehls umfassen.

3. Schalteinrichtung (2) nach Anspruch 1 oder 2, **dadurch gekennzeichnet, dass** die Schaltmittel (12, 14, 18, 38) zur Betätigung der Schaltelemente (42, 50, 52, 54) im Hauptgetriebeteil (6) einen pneumatischen, hydraulischen oder elektrischen Aktuator (18) zur Ausführung eines Wählbefehls umfassen.

4. Schalteinrichtung (2) nach Anspruch 2 oder 3, **dadurch gekennzeichnet dass** eine Ansteuerung des Aktuators (12, 18) aufgrund von in einer Steuereinrichtung (37) nach vorgegebenen Regeln verarbeiteten Befehlen automatisiert erfolgt.

5. Schalteinrichtung (2) nach einem der Ansprüche 2 bis 4, **dadurch gekennzeichnet, dass** der Aktuator (12) zur Ausführung des Schaltbefehls mit zumindest Teilen des Wählbefehls ansteuerbar ist zur Ausführung des Wählvorganges in der Richtung des Schaltvorganges.

6. Schalteinrichtung (2) nach einem der Ansprüche 1 bis 5, **dadurch gekennzeichnet, dass** an den Freiraum (40) einerseits ein Schaltelement (44) des Gruppengetriebeteils (10) und andererseits ein Schaltelement (42) des Hauptgetriebeteils (6) angrenzt.

7. Schalteinrichtung (2) nach einem der Ansprüche 1 bis 6, **dadurch gekennzeichnet, dass** die Schaltelemente (44, 46) des Gruppengetriebeteils (10) synchronisierte Schaltelemente sind.

8. Schalteinrichtung (2) nach einem der Ansprüche 1 bis 7, **dadurch gekennzeichnet, dass** die Schaltelemente (44, 46) des Gruppengetriebeteils (10) eine Klauenschaltung ohne Synchronisierungselemente umfasst.

9. Schalteinrichtung (2) nach Anspruch 8, **dadurch gekennzeichnet, dass** bei Vorhandensein einer Klauenschaltung ohne Synchronisierelemente die neben dem Freiraum (40) angeordneten Schaltelemente (42) des Hauptgetriebeteils (6) Schaltelemente für die höchste und die niedrigste Übersetzungsstufe des Hauptgetriebeteils (6) sind.

10. Schalteinrichtung (2) nach einem der Ansprüche 1 bis 9, **dadurch gekennzeichnet, dass** die Schaltmittel (12, 14, 18, 38) zur Betätigung der Schaltelemente (42, 50, 52, 54) im Hauptgetriebeteil (6) eine einzige Schaltwelle (14) umfassen.

11. Schalteinrichtung (2) nach einem der Ansprüche 1 bis 10, **dadurch gekennzeichnet, dass** der Schaltfinger (38) mit den Schaltmitteln (12, 18) zur Ausführung einer Schaltbewegung und einer Wählbewegung direkt verbunden ist.

## Claims

1. Shifting system (2) for a multispeed vehicle transmission (4) with a main transmission part (6) and at least one range-change transmission part (10) comprising shifting equipment (12, 14, 18, 38) for actuation of shifting components (42, 50, 52, 54) in the main transmission part (6) and shifting equipment (12, 14, 18, 38) for actuation of shifting components (44, 46) in the range-change transmission part (10), with the shifting equipment (12, 14, 18, 38) for actuation of the shifting components (42, 50, 52, 54) in the main transmission part (6) also actuating the shifting components (44, 46) in the range-change transmission part (10), **characterized in that** the shifting equipment (12, 14, 18, 38) features a free space (40) in which an element (38) of the shifting equipment actuating the shifting components (42, 44, 46, 50, 52, 54) is movable towards a shifting process during a selection process for selection of the desired shifting component (42, 44, 46, 50, 52, 54).

2. Shifting system (2) according to claim 1, **characterized in that** the shifting equipment (12, 14, 18, 38) for actuation of the shifting components (42, 50, 52, 54) in the main transmission part (6) includes a pneumatic, hydraulic or electric actuator (12) for execution of a shift command.

3. Shifting system (2) according to claim 1 or 2, **characterized in that** the shifting equipment (12, 14, 18, 38) for actuation of the shifting components (42, 50, 52, 54) in the main transmission part (6) includes a pneumatic, hydraulic or electric actuator (18) for execution of a select command.

4. Shifting system (2) according to claim 2 or 3, **characterized in that** control of the actuator (12, 18) is automated on account of commands processed in a control device (37) according to specified rules.

5. Shifting system (2) according to one of the claims 2 thru 4, **characterized in that** the actuator (12) for execution of the shift command can be controlled with at least some select command content for execution of a select process in the direction of the shift process.

6. Shifting system (2) according to one of the claims 1 thru 5, **characterized in that** a shifting component (44) of the range-change transmission part (10) and a shifting component (42) of the main transmission part (6) are adjacent to the free space (40).

7. Shifting system (2) according to one of the claims 1 thru 6, **characterized in that** the shifting components (44, 46) of the range-change transmission part (10) are synchronized shifting components.

8. Shifting system (2) according to one of the claims 1 thru 7, **characterized in that** the shifting components (44, 46) of the range-change transmission part (10) include a constant-mesh transmission without synchronizing elements.

9. Shifting system (2) according to claim 8, **characterized in that** if a constant-mesh transmission without synchronizing elements exists, the shifting components (42) of the main transmission part (6) arranged adjacent to the free space (40) represent shifting components for the highest and the lowest ratio of the main transmission part (6).

10. Shifting system (2) according to one of the claims 1 thru 9, **characterized in that** the shifting equipment (12, 14, 18, 38) for actuation of the shifting components (42, 50, 52, 54) in the main transmission part (6) comprise a singe selector shaft (14).

11. Shifting system (2) according to one of the claims 1 thru 10, **characterized in that** the shifting finger (38) is directly connected to the shifting equipment (12, 18) for execution of a shift movement and a select movement.

## Revendications

1. Dispositif de changement de rapports (2) pour une transmission multivitesses de véhicule (4) dotée d'une boîte de base (6) et d'au moins une boîte à plusieurs groupes (10), comprenant des moyens de changement de rapports (12, 14, 18, 38) pour l'actionnement d'éléments de commande (42, 50, 52, 54) dans la boîte de base (6) et des moyens de changement de rapports (12, 14, 18, 38) pour l'actionnement d'éléments de commande (44, 46) dans la boîte à plusieurs groupes (10), et dans laquelle les moyens de changement de rapports (12, 14, 18, 38) pour l'actionnement des éléments de commande (42, 50, 52, 54) dans la boîte de base (6) actionnent également les éléments de commande (44, 46) dans la boîte à plusieurs groupes (10), **caractérisé en ce que** les moyens de changement de rapports (12, 14, 18, 38) comportent un espace libre (40), dans lequel peut être déplacé dans la direction du changement de rapport un élément (38) actionnant pendant un processus de sélection de l'élément de commande souhaité (42, 44, 46, 50, 52, 54) les éléments de commande (42, 44, 46, 50, 52, 54) des moyens de changement de rapports.

2. Dispositif de changement de rapports (2) selon la revendication 1, **caractérisé en ce que** les moyens de changement de rapports (12, 14, 18, 38) pour l'actionnement des éléments de commande (42, 50, 52, 54) dans la boîte de base (6) comprennent un actionneur pneumatique, hydraulique ou électrique (12) pour l'exécution d'un ordre de changement de rapport.

3. Dispositif de changement de rapports (2) selon la revendication 1 ou 2, **caractérisé en ce que** les moyens de changement de rapports (12, 14, 18, 38) pour l'actionnement des éléments de commande (42, 50, 52, 54) dans la boîte de base (6) comprennent un actionneur pneumatique, hydraulique ou électrique (18) pour l'exécution d'un ordre de sélection.

4. Dispositif de changement de rapports (2) selon la revendication 2 ou 3, **caractérisé en ce que** un pilotage de l'actionneur (12, 18) est effectué de façon automatisée en raison d'ordres élaborés dans un dispositif de commande (37) selon des règles formulées.

5. Dispositif de changement de rapports (2) selon une des revendications 2 à 4, **caractérisé en ce que** pour l'exécution du processus de sélection dans la direction du changement de rapport, l'actionneur (12) peut être piloté pour l'exécution de l'ordre de changement de rapport avec au moins des parties de l'ordre de sélection.

6. Dispositif de changement de rapports (2) selon une des revendications 1 à 5, **caractérisé en ce que** à l'espace libre (40) est adjacent d'un côté un élément de commande (44) de la boîte à plusieurs groupes (10) et de l'autre côté un élément de commande (42) de la boîte de base (6).

7. Dispositif de changement de rapports (2) selon une des revendications 1 à 6, **caractérisé en ce que** les éléments de commande (44, 46) de la boîte à plusieurs groupes (10) sont des éléments de commande synchronisés.

8. Dispositif de changement de rapports (2) selon une des revendications 1 à 7, **caractérisé en ce que** les éléments de commande (44, 46) de la boîte à plusieurs groupes (10) comprennent une commande à crabots sans éléments de synchronisation.

9. Dispositif de changement de rapports (2) selon la revendication 8, **caractérisé en ce que** en cas de présence d'une commande à crabots sans éléments de synchronisation, les éléments de commande (42) de la boîte de base (6) disposés à côté de l'espace libre (40) sont des éléments de commande pour le rapport de démultiplication le plus grand et le rapport de démultiplication le plus petit de la boîte de base (6).

10. Dispositif de changement de rapports (2) selon une des revendications 1 à 9, **caractérisé en ce que** les moyens de changement de rapports (12, 14, 18, 38) pour l'actionnement des éléments de commande (42, 50, 52, 54) dans la boîte de base (6) comprennent un seul arbre de commande (14).

11. Dispositif de changement de rapports (2) selon une des revendications 1 à 10, **caractérisé en ce que** le doigt de commande (38) est lié directement aux moyens de changement de rapports (12, 18) pour l'exécution d'un mouvement de changement de rapport et d'un mouvement de sélection.
